# DEMANDE DE BREVET EUROPEEN

(11) **EP 0 703 376 A2**
(43) Date de publication de la demande: **27.03.1996**
(21) Numéro de dépôt: 95112581.4
(22) Date de dépôt: 10.08.1995
(51) Int. Cl.: F16D 41/30

(54) **Moyeu à roue libre pour cycles**

(30) Priorité: 09.09.1994 FR 9410931
(71) Demandeur: MAVIC S.A., F-01990 Saint-Triviers sur Moignans (FR)
(72) Inventeur: Mercat, Jean-Pierre, F-01990 Chaneins (FR)
(74) Mandataire: Lejeune, Benoit

(57) **Abrégé**

Moyeu de roue libre pour cycles dont l'entraînement du moyeu de roue par la roue libre se fait par une liaison unidirectionnelle constituée par la coopération d'au moins un cliquet mobile, sollicité par un ressort vers une position active en saillie, où il coopère avec une denture, ledit cliquet étant mobile en pivotement sur une pièce support solidaire du corps de moyeu tandis que la denture est réalisée sur un corps de roue libre, caractérisé en ce que la pièce support de cliquet est en un matériau dont les caractéristiques mécaniques et/ou de densité sont semblables à celles du matériau dont est réalisé le corps de moyeu, ledit cliquet étant monté pivotant sur une pige solidaire de ladite pièce support, ladite pige étant réalisée dans un matériau dont les caractéristiques mécaniques et/ou de densité sont semblables à celles du matériau dont est réalisé le corps de roue libre.

## Description

La présente invention est relative à un moyeu à roue libre se montant sur la roue arrière d'un cycle et comportant un ou plusieurs pignon(s), aptes à coopérer avec une chaîne d'entraînement déplaçable transversalement par un dérailleur, dans le cas de plusieurs pignons.

Dans la plupart des moyeux actuels, la liaison en rotation unidirectionnelle entre le corps du moyeu et un corps de roue libre portant les pignons est assurée par deux cliquets tangentiels se déplaçant dans un plan perpendiculaire à l'axe et coopérant avec un rochet, et interposés avec ce rochet entre les éléments précités.

Les utilisateurs de cycles peuvent être de simples promeneurs, mais aussi des compétiteurs soucieux de performance, et ces derniers recherchent toujours le vélo le plus résistant et léger possible afin de satisfaire leur passion. La légèreté des pièces est donc un souci permanent des constructeurs, mais dans le domaine des roues libres, rien n'a, à ce jour, été fait et les différents éléments de construction de la roue libre sont réalisés en matériau de forte densité tel qu'en acier pour pouvoir résister à toutes les sollicitations qui leur sont soumises lors de l'utilisation du cycle. Ainsi, traditionnellement, la partie solidaire du corps de moyeu porte les cliquets ou la denture, et le corps de la roue libre porte inversement et respectivement la denture où les cliquets qui sont en acier. Mais si cette solution est, pour ses performances, convenable, il n'en est pas de même sur le plan du poids considéré comme trop élevé. De plus, notons que, dans les systèmes actuels, la pièce solidaire du moyeu portant les cliquets est une pièce indépendante supplémentaire fixée sur le corps de moyeu, cette pièce étant, comme nous l'avons signalé, en acier, alors que le corps de moyeu est en aluminium.

La présente invention veut donc résoudre les inconvénients que l'on trouve dans les moyeux traditionnels et propose une nouvelle conception de roue libre performante et légère, puisque la partie de corps de moyeu assurant la liaison avec la roue libre est réalisée dans un matériau dont les caractéristiques mécaniques sont sensiblement identiques à celui du matériau du corps de moyeu proprement dit. Elle peut être, par exemple, en aluminium ou en matériau plastique et même être avantageusement un prolongement du corps de moyeu proprement dit.

Ainsi, le moyeu de roue libre pour cycles est du type dans lequel l'entraînement du moyeu de roue par la roue libre se fait par une liaison unidirectionnelle constituée par la coopération d'au moins un cliquet mobile, sollicité par un système élastique pour passer d'une position escamotée inactive vers une position active en saillie, dans laquelle il coopère avec une denture, ledit cliquet étant mobile en pivotement sur une pièce support solidaire du corps de moyeu tandis que la denture est réalisée sur un corps de roue libre monté pivotant sur ladite pièce support de cliquet, et est caractérisé en ce que la pièce support de cliquet est en un matériau dont les caractéristiques mécaniques et/ou de densité sont semblables à celles du matériau dont est réalisé le corps de moyeu, ledit cliquet étant monté pivotant sur une pige solidaire de ladite pièce support, ladite pige étant réalisée dans un matériau dont les caractéristiques mécaniques et/ou de densité sont semblables à celles du matériau dont est réalisé le corps de roue libre.

Selon des caractéristiques complémentaires, le matériau de la pièce support de cliquet a une résistance à la rupture comprise entre 700 et 200 Méga Pascals, comme par exemple en aluminium ou en matériau plastique, tandis que le matériau de la pige et/ou du cliquet a une résistance à la rupture comprise entre 1000 et 2000 Méga Pascals.

Selon une autre caractéristique complémentaire la pièce support de cliquet comprend une paroi périphérique dans laquelle est encastrée la pige sur laquelle pivote le cliquet, et dans une disposition préférée celle-ci est un prolongement du corps de moyeu et fait corps avec ce dernier. Notons que la paroi périphérique comprend un logement destiné à recevoir le cliquet, tandis que les extrémités de la pige sont encastrées dans la paroi cylindrique de la pièce support, et que sa partie centrale est en appui sur une surface correspondante de la paroi cylindrique.

Par ailleurs, le cliquet comprend une extrémité d'engrènement et une extrémité de pivotement qui est une surface cylindrique coopérant avec la surface de la partie centrale de la pige, tandis que le système élastique est un ressort de torsion comprenant un brin d'actionnement et un brin d'appui, ledit brin d'actionnement comprenant une extrémité destinée à coopérer avec une rampe réalisée sur le cliquet au fond d'une fente centrale dont les parois latérales permettent le maintien latéral du brin d'actionnement et de son extrémité.

De plus, le moyeu de l'invention est monté pivotant autour d'un axe par l'intermédiaire d'au moins deux roulements à billes d'extrémité, à savoir, d'un côté, deux roulements à billes logés dans un premier logement d'extrémité réalisé dans la paroi cylindrique de la pièce support, tandis que de l'autre côté, un troisième roulement à billes est logé dans un autre logement d'extrémité, réalisé dans le corps de moyeu. L'ensemble constitué par le corps de moyeu et la pièce support de cliquet est, de plus, retenu latéralement par le troisième roulement à billes, luimême bloqué latéralement par un écrou de blocage et par l'un des deux autres roulements à billes, dont l'un comprend un circlip ou un épaulement, les deux roulements étant, par ailleurs, bloqués latéralement sur leur diamètre intérieur par la partie d'extrémité creuse. Notons que l'écrou de blocage du troisième roulement est avantageusement freiné par un joint torique et permet de régler le jeu du montage de roulement, l'écrou assurant ainsi le blocage et le réglage.

D'autres caractéristiques et avantages de l'invention se dégageront de la description qui va suivre au regard des dessins annexés, qui ne sont donnés qu'à titre d'exemples non limitatifs.

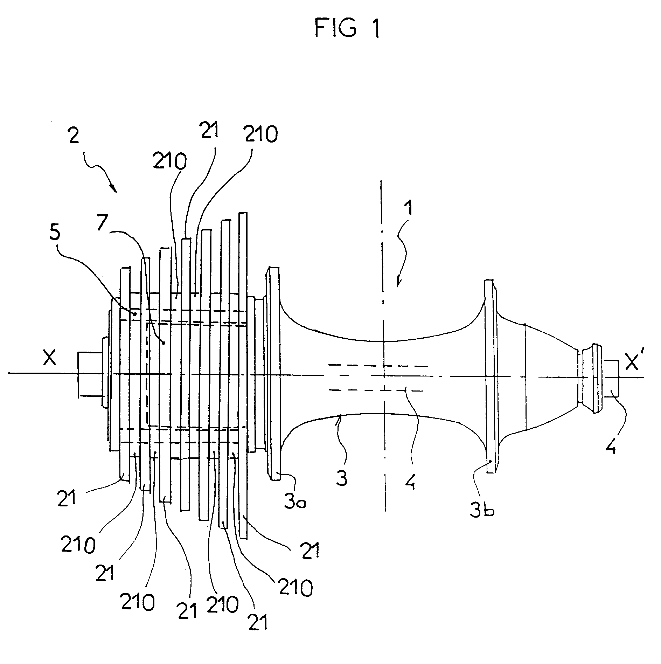

La figure 1 est une vue extérieure du moyeu de l'invention.

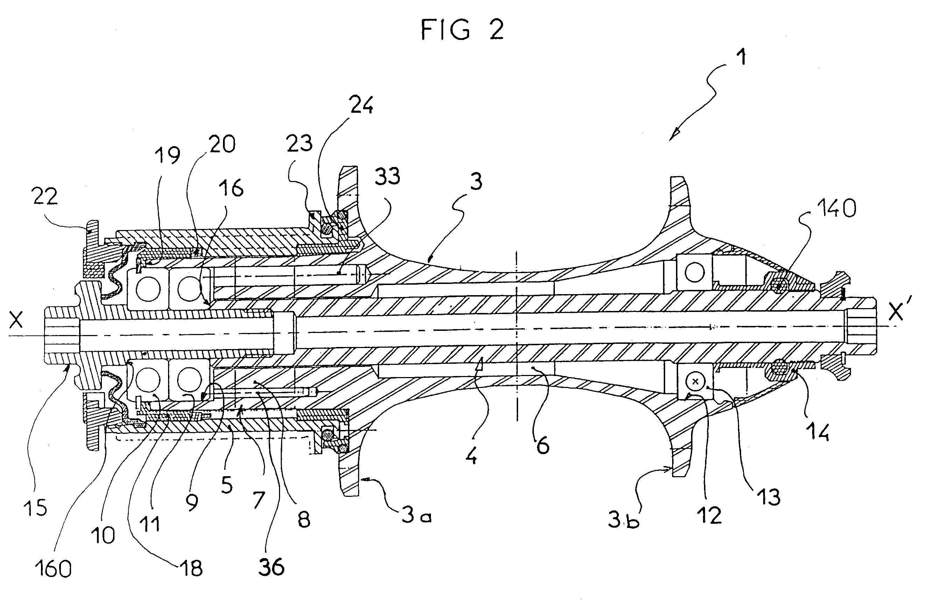

La figure 2 est une vue en coupe longitudinale de l'ensemble du moyeu.

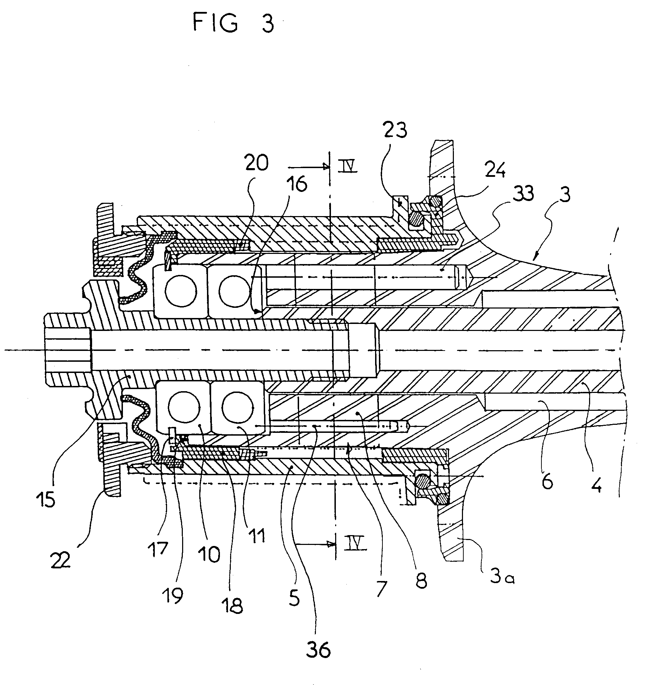

La figure 3 est une vue partielle en coupe montrant plus particulièrement la partie concernant l'invention.

La figure 4 est une vue en coupe transversale selon IV-IV, de la figure 3.

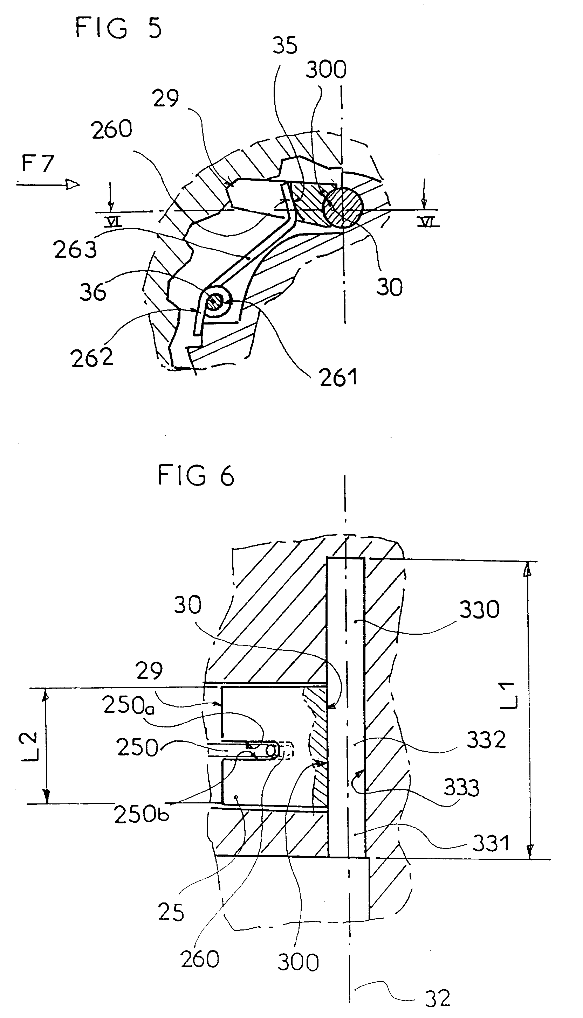

La figure 5 est une vue partielle de la figure 4.

La figure 6 est une vue partielle en coupe selon VI-VI, de la figure 5.

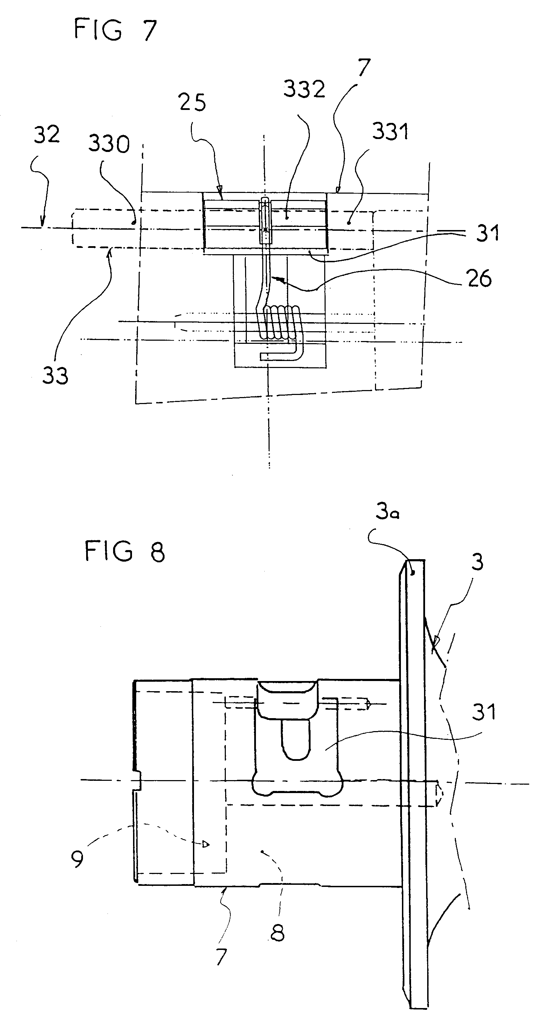

La figure 7 est une vue latérale partielle selon F7 de la figure 5, le corps de roue libre ayant été retiré.

La figure 8 est une vue extérieure de l'extrémité du corps de moyeu destiné à recevoir le corps de roue libre, les cliquets n'étant pas représentés.

Le moyeu de roue libre est constitué d'un moyeu de roue (1) entraîné unidirectionnellement par la roue libre (2). Sur les figures, la référence (3) désigne le corps de moyeu monté libre en rotation sur un arbre creux (4), tandis que la référence (5) désigne le corps de roue libre, la tige d'un mécanisme permettant le blocage rapide du moyeu aux extrémités des fourches du cycle n'étant pas représentée pour faciliter la compréhension du dessin. Le corps de moyeu (3) est solidaire de deux flasques (3a, 3b) munis, de façon connue, de trous pour la fixation de rayons non représentés le reliant à la jante de la roue.

Le corps de moyeu (3) comprend un trou central (6) destiné à recevoir l'arbre creux (4). Par ailleurs et selon une caractéristique de l'invention, le corps de moyeu (3) comprend, du côté du corps de roue libre (5), un prolongement tubulaire (7) comprenant une paroi cylindrique (8) dont l'extrémité comprend un premier logement (9) destiné à recevoir deux roulements à billes d'extrémité (10, 11). L'autre extrémité du corps de moyeu (3) comprenant un autre logement (12) destiné à recevoir un troisième roulement à billes (13). Les trois roulements (10, 11, 13) étant, par ailleurs, retenus sur l'arbre creux (4) qui comprend, d'un côté, un écrou de blocage (14) pour le troisième roulement (13), tandis qu'il comprend, de l'autre côté, une portion d'extrémité d'arbre creux (15) prolongeant l'arbre creux proprement dit (4), et destinée à retenir latéralement l'ensemble constitué par le premier (10) et le deuxième roulement (11), qui sont forcés en appui sur la face transversale (16) correspondante dudit arbre creux (4) par action de la face transversale (160) de la portion d'extrémité (15) vissée sur l'arbre creux. Le corps de moyeu est ainsi monté pivotant sur l'arbre creux (4) et sa portion d'extrémité (15) grâce aux trois roulements à billes (10, 11, 13). Le blocage en translation latérale selon l'axe (XX') étant assuré, d'un côté, par le troisième roulement (13) et, de l'autre côté, par un circlip (17) engagé dans une gorge du deuxième roulement à billes (11) contre lequel s'appuie une bague de retenue (18), elle-même en appui sur la face transversale (19) du prolongement tubulaire (7), laquelle bague de retenue assurant, par ailleurs, le blocage latéral du corps de roue libre (5) par l'intermédiaire d'une bague circulaire (20) solidaire en rotation avec ledit corps de roue libre (5) puisque bloquée en rotation par plusieurs saillies d'encastrement.

Ajoutons que l'écrou de blocage (14) est freiné par un joint torique (140), en élastomère, matériau déformable du type plastique connu, et que ledit écrou permet de régler le jeu axial du moyeu, ledit écrou de blocage (14) constituant ainsi un moyeu de réglage et de blocage.

De façon connue, le corps de roue libre (5) est muni sur sa périphérie de cannelures, constituant un organe de positionnement et d'entraînement en rotation pour des pignons étagés (21) constituant les éléments du changement de vitesses. Ces pignons sont séparés les uns des autres par des entretoises (210) et sont calés en translation sur le corps (5) par un écrou d'extrémité (22) les plaquant contre la face d'une collerette (23) disposée à l'autre extrémité dudit corps de roue libre (5). Par ailleurs, entre le corps de roue libre (5) et le corps de moyeu (3), et plus particulièrement entre son prolongement tubulaire (7) et son flasque (3a), il est prévu une bague (24) d'appui, de frottement, et d'étanchéité.

La liaison en rotation unidirectionnelle entre le corps de moyeu (3) et le corps de roue libre (5) portant les pignons est, de façon connue en soi, assurée par deux cliquets tangentiels (25a, 25b), mobiles en rotation, pour pouvoir pivoter dans un plan perpendiculaire à l'axe (XX') contre l'action d'un ressort (26a, 26b) et coopérer avec une succession de dents (27) disposées sur la face périphérique interne (28) du corps de roue libre (5).

Notons que le corps de roue libre (5) est en acier tandis que le prolongement du corps de moyeu (3) et portant les cliquets (25a, 25b) est en aluminium, comme l'est ledit corps de moyeu (3). On notera que, dans l'exemple de réalisation préféré tel qu'illustré, le prolongement (7), qui pourrait être appelé pièce d'extrémité menée, constitue une pièce support pour les cliquets et que cette pièce fait avantageusement corps avec le corps de moyeu (3) puisqu'elle en est le prolongement. Par ailleurs, chacun des cliquets (25a, 25b) est réalisé en acier et comprend une extrémité d'engrènement (29) et une extrémité de pivotement et d'appui (30). Notons aussi que chacun des cliquets (25a, 25b) est logé dans un logement correspondant (31) réalisé dans la paroi cylindrique (8) du prolongement (7), la largeur de chaque logement étant légèrement supérieure au jeu près à la largeur du cliquet pour le bloquer en déplacement latéral, mais en permettre son pivotement. En effet, comme nous l'avons vu précédemment, chacun des cliquets est pivotant autour d'un axe virtuel (32) parallèle à l'axe du moyeu (XX') et constitué par une pige cylindrique d'appui (33) réalisée en acier et dont les extrémités (320, 331) sont encastrées dans la paroi cylindrique en aluminium (8) et dont la partie centrale (332) est en appui contre la face d'appui (34) pour pouvoir encaisser les efforts transmis par le cliquet correspondant. Notons que l'extrémité de pivotement du cliquet (30) est une surface cylindrique coopérant avec la surface correspondante de la partie centrale (333) de la pige (33) et que la pige est logée dans un orifice cylindrique dont l'axe X est parallèle à l'axe du moyeu et qui débouche à l'extrémité du prolongement.

Chacun des cliquets est sollicité en position d'engagement avec les dents du corps de roue libre par un système élastique constitué par un ressort de torsion, respectivement (26a, 26b) dont l'extrémité libre (260) est en appui sur une rampe (35) réalisée sur le cliquet correspondant. Notons que l'action du ressort (26a, 26b) sur le cliquet correspondant, et en particulier sur la rampe (35) de ce dernier, a pour effet deux actions simultanées, à savoir, d'une part, la sollicitation en pivotement vers l'extérieur en position d'engagement dans la denture, et d'autre part, l'appui et le maintien en contact de la surface cylindrique (30) du cliquet contre la surface d'appui (300) correspondante de la pige. A cet effet, le ressort (26a, 26b) présente une partie enroulée centrale (261) retenue par un axe de maintien (36) prolongé, d'un côté, par un brin d'appui (262), et, de l'autre côté, par un brin d'actionnement (262) terminé par une extrémité d'appui repliée (263) destinée à coopérer avec la rampe (35) du cliquet. Notons que cette dernière est réalisée au fond d'une fente centrale (250) dont les parois latérales (250a, 250b) permettent le maintien latéral du brin d'actionnement du ressort (25) par coopération avec son extrémité repliée (260). Par ailleurs, les efforts appliqués au cliquet par la denture sont encaissés par l'appui de la surface cylindrique d'appui du cliquet (30) sur la surface d'appui (300) correspondante de l'axe. Ajoutons aussi que les efforts exercés sur la pige (33) sont encaissés, d'une part, par les encastrements des extrémités (330, 331) et, d'autre part, par appui de sa partie centrale (332) sur la surface (333) correspondante de la paroi cylindrique (8) en aluminium. Ladite surface (333) est de forme complémentaire à la surface de la pige qui est en appui. Ainsi, la surface retransmettant la poussée du cliquet (25) par l'intermédiaire de la pige (33) au prolongement tubulaire (7) du corps de corps de moyeu (3) peut être aisément dimensionnée en longueur et en diamètre afin que la pression de contact entre ladite pige (33) et le prolongement (7) soit admissible par le matériau de dernier, qui est, selon le mode illustré, en aluminium. Notons que la longueur (L1) de l'appui de la pige (33) sur la surface (333) de la pièce support (7) est supérieure à la largeur (L2) de l'appui du cliquet (25) sur ladite pige et ce, afin que les efforts sur le matériau dont est réalisée ladite pièce support (7), soient mieux répartis et que les pressions s'y trouvent inférieures à celles de l'appui du cliquet sur la pige.

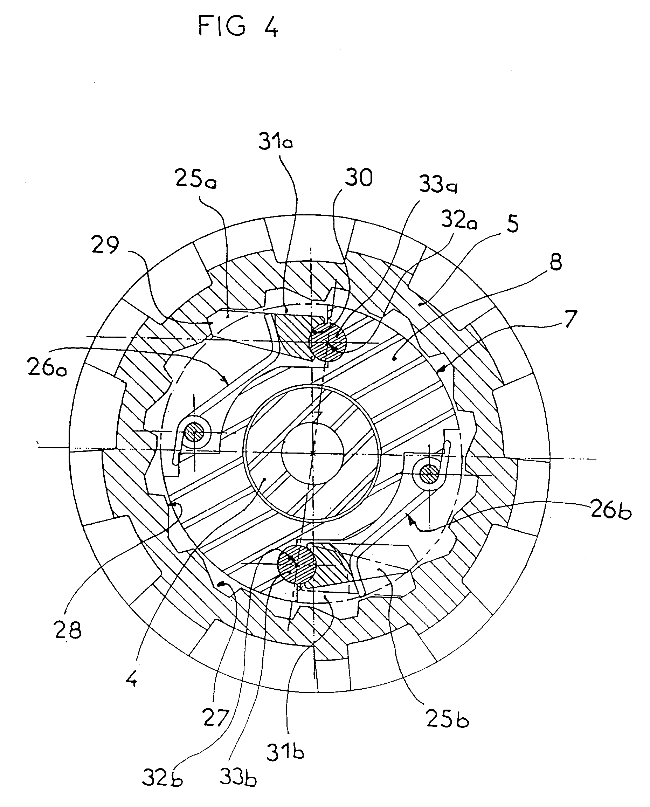

Selon le mode de réalisation décrit et illustré à titre d'exemple, la roue libre comprend deux cliquets diamétralement opposés, mais on ne sortirait pas du cadre de l'invention s'il en était autrement. Notons aussi que les cliquets peuvent être disposés de sorte à être engagés ensemble dans la denture du corps de roue libre ou de façon décalée dans le temps, comme cela est illustré à la figure 4.

Dans le mode d'exécution tel qu'illustré, la pièce support (7) est un prolongement du corps de moyeu qui est réalisé en une seule pièce, mais il pourrait, bien entendu, et ladite pièce support de cliquet (7) pourrait, être une pièce indépendante fixée audit corps de moyeu (3) pour lui être solidaire.

La pièce support (7) portant les cliquets selon l'invention est, selon l'invention, réalisée dans un matériau dont les caractéristiques mécaniques et/ou la densité sont très inférieures aux caractéristiques mécaniques et/ou la densité du matériau du corps de roue libre (5) portant les pignons. La pièce support (7) quand elle est le prolongement du corps de moyeu (3) est, bien entendu, réalisée avec le même matériau. Ainsi, le corps de moyeu (3) étant généralement en aluminium, son prolongement (7) est en aluminium. Mais il pourrait en être autrement et le corps de moyeu (3) avec son prolongement (7) pourrait être en matériau plastique tel qu'en thermoplastique du type polyamide chargée de fibre de carbone. Dans le cas où la pièce support (7) portant les cliquets (25) est indépendante du corps de moyeu (3), celle-ci peut donc être en une matière identique ou différente de celle du corps de moyeu. Toutefois, si elle est différente, elle reste d'une matière dont les caractéristiques mécaniques et/ou la densité sont équivalentes, du moins dans les mêmes gammes de valeur, et en tous cas, dans des valeurs très inférieures à celles du corps de roue libre. Ainsi, la pièce support peut être en aluminium ou en matériau plastique comme évoqué précédemment. En résumé, que la pièce support (7) soit la même pièce que le corps de moyeu (3) ou une pièce indépendante, celle-ci est réalisée dans un matériau dont la résistance à la rupture peut être comprise entre 700 et 200 Méga Pascals, alors que le corps de roue libre (7) et les cliquets (25) sont réalisés dans un matériau dont la résistance à la rupture peut être comprise entre 1000 et 2000 Méga Pascals. Ajoutons à cela que la pige (33) est dans un matériau de caractéristiques similaires à celles du cliquet et peut donc être en acier, comme déjà mentionné dans la description, mais en un autre matière résistante telle qu'en titane, en alliage de bronze béryllium ou en céramique.

On pourrait aussi dire que les caractéristiques du matériau dont est réalisée la pièce support (7) sont plus semblables aux caractéristiques du matériau dont est réalisé le corps de moyeu (3) que celles dont est réalisé le corps de roue libre (5).

Bien entendu, l'invention n'est pas limitée aux modes de réalisation décrits et représentés à titre d'exemples, mais elle comprend aussi tous les équivalents techniques ainsi que leurs combinaisons.

## Revendications

1. Moyeu de roue libre pour cycles d'axe (XX'), du type dans lequel l'entraînement du moyeu de roue (1) par la roue libre (2) se fait par une liaison unidirectionnelle constituée par la coopération d'au moins un cliquet mobile (25a, 25b), sollicité par un système élastique (26a, 26b) pour passer d'une position escamotée inactive vers une position active en saillie, dans laquelle il coopère avec une denture (27), ledit cliquet (25a, 25b) étant mobile en pivotement sur une pièce support (7, 8) solidaire du corps de moyeu (3) tandis que la denture est réalisée sur un corps de roue libre (5) monté pivotant sur ladite pièce support de cliquet, caractérisé en ce que la pièce support de cliquet (7, 8) est en un matériau dont les caractéristiques mécaniques et/ou de densité sont semblables à celles du matériau dont est réalisé le corps de moyeu (3), ledit cliquet étant monté pivotant sur une pige (33) solidaire de ladite pièce support, ladite pige étant réalisée dans un matériau dont les caractéristiques mécaniques et/ou de densité sont semblables à celles du matériau dont est réalisé le corps de roue libre (5).

2. Moyeu de roue libre pour cycles selon la revendication 1, caractérisé en ce que le matériau de la pièce support de cliquet (7) a une résistance à la rupture comprise entre 700 et 200 Méga Pascals.

3. Moyeu de roue libre pour cycles selon la revendication 2, caractérisé en ce que la pièce support de cliquet (7) est en aluminium ou en matériau plastique.

4. Moyeu de roue libre pour cycles selon la revendication 2 ou 3, caractérisé en ce que le matériau de la pige (33) et/ou du cliquet (25) a une résistance à la rupture comprise entre 1000 et 2000 Méga Pascals.

5. Moyeu de roue libre pour cycle selon la revendication 4, caractérisé en ce que la pige (33) est en acier.

6. Moyeu de roue libre pour cycles selon l'une quelconques des revendications précédentes, caractérisé en ce que la pièce support de cliquet (7) comprend une paroi périphérique (8) dans laquelle est encastrée la pige (33) sur laquelle pivote le cliquet (25a, 25b).

7. Moyeu de roue libre pour cycles selon la revendication 6, caractérisé en ce que la paroi périphérique (8) comprend un logement (31a, 31b) destiné à recevoir le cliquet (25a, 25b), tandis que les extrémités (330, 331) de la pige (33) sont encastrées dans la paroi cylindrique (8) de la pièce support (7), et que sa partie centrale (332) est en appui sur une surface correspondante (333) de la paroi cylindrique (8).

8. Moyeu de roue libre pour cycles selon la revendication 7, caractérisé en ce que le cliquet (25a, 25b) comprend une extrémité d'engrènement (29) et une extrémité de pivotement qui est une surface cylindrique coopérant avec la surface de la partie centrale (333) de la pige (33).

9. Moyeu de roue libre pour cycles selon l'une quelconque des revendications précédentes, caractérisé en ce que le système élastique (26a, 26b) est un ressort de torsion comprenant un brin d'actionnement (262) et un brin d'appui (261), ledit brin d'actionnement comprenant une extrémité (263) destinée à coopérer avec une rampe (35) réalisée sur le cliquet (25a, 25b) au fond d'une fente centrale (250) dont les parois latérales (250a, 250b) permettent le maintien latéral du brin d'actionnement (262) et de son extrémité (263).

10. Moyeu de roue libre pour cycles selon la revendication 9, caractérisé en ce que le moyeu comprend, d'un côté, deux roulements à billes (10, 11) logés dans un premier logement d'extrémité (9), réalisé dans la paroi cylindrique (8) de la pièce support (7).

11. Moyeu de roue libre pour cycles selon la revendication 10, caractérisé en ce que l'ensemble constitué par le corps de moyeu (3) et la pièce support de cliquet (7) est retenu latéralement par un troisième roulement à billes (13), lui-même bloqué latéralement par un écrou de blocage et de réglage (14) et par l'un des deux autres roulements à billes (10, 11), dont l'un comprend un circlip ou un épaulement (17), les deux roulements (10, 11) étant, par ailleurs, bloqués latéralement par la partie d'extrémité creuse (15), et, de l'autre côté, un troisième roulement à billes (13) logé dans un autre logement d'extrémité (12), réalisé dans le corps de moyeu (3).

12. Moyeu de roue libre pour cycles selon l'une quelconque des revendications précédentes, caractérisé en ce que la pièce support de cliquet (7, 8) est un prolongement (7) du corps de moyeu (3) et qui fait corps avec ledit corps de moyeu.
